Europäisches Patentamt

European Patent Office

Office européen des brevets

(11) Veröffentlichungsnummer: **0 009 130**
**B1**

(12) EUROPÄISCHE PATENTSCHRIFT

(45) Veröffentlichungstag der Patentschrift:
**25.11.81**

(51) Int. Cl.³: **G 11 B 5/016, G 11 B 17/02**

(21) Anmeldenummer: **79103104.0**

(22) Anmeldetag: **23.08.79**

(54) Vorrichtung zum Spreizen flexibler Aufzeichnungsträger an beliebiger Stelle eines rotierenden Stapels magnetischer Platten.

(30) Priorität: **20.09.78 DE 2840851**

(43) Veröffentlichungstag der Anmeldung:
**02.04.80 Patentblatt 80/7**

(45) Bekanntmachung des Hinweises auf die Patenterteilung:
**25.11.81 Patentblatt 81/47**

(84) Benannte Vertragsstaaten:
**DE FR GB**

(56) Entgegenhaltungen:
**DD-A-121 999**
**DE-C3-2 431 373**
**US-A-3 703 713**

(73) Patentinhaber: **International Business Machines Corporation, Armonk, N.Y. 10504 (US)**

(72) Erfinder: **Hartmann, Kurt, Breite Heerstrasse 33, D-7260 Calw-Heumaden (DE)**
Erfinder: **Matthaei, Horst, Geissäckerstrasse 4, D-7035 Waldenbuch (DE)**

(74) Vertreter: **Herzog, Joachim, Dipl.-Ing, Schönaicher Strasse 220, D-7030 Böblingen (DE)**

## Vorrichtung zum Spreizen flexibler Aufzeichnungsträger an beliebiger Stelle eines rotierenden Stapels magnetischer Platten

Die Erfindung bezieht sich auf eine Vorrichtung zum Spreizen flexibler Aufzeichnungsträger an beliebiger Stelle eines rotierenden Stapels magnetischer Platten, bei welchem der Abstand benachbarter Platten geringer als die entsprechende Ausdehnung zur Datenaufzeichnung bzw. Datenabtastung dienender Wandler ist, so daß mindestens ein Wandler über mindestens einer Seite einer Platte in Arbeitsstellung gebracht werden kann.

Aus der DE-PS 2 431 373 ist eine Vorrichtung zum Spreizen eines rotierenden Stapels flexibler, magnetischer Aufzeichnungsträger bekannt, die aus einem Trennmesser besteht, das die Form und das Profil ähnlich einem Flugzeugtragflügel aufweist. Da die plattenförmigen Aufzeichnungsträger in axialer Richtung so dicht gepackt sind, um insgesamt einen sehr raumsparenden Datenspeicher großen Speichervolumens erzielen zu können, kann der normale Wandler niedriger Bauart ohne Spreizen der flexiblen Aufzeichnungsträger nicht zu den Speicherstellen gelangen. Es ist also erforderlich, daß die flexiblen Aufzeichnungsträger aus ihrer Rotationsebene ausgelenkt werden, um dem Magnetkopf Zugriff und Zugang zu der ausgewählten Speicherstelle zu verschaffen. Bei der bekannten Anordnung wird zunächst das Trennmesser relativ weit radial oder über eine Bogenbewegung in den rotierenden Stapel eingefahren und somit die Öffnung geschaffen, in die dann anschließend der Wandlerkopf in radialer Richtung eingefahren und in Arbeitsstellung gegenüber der ausgewählten Plattenseite gebracht werden kann.

Beim Einfahren eines solchen Trennmessers in einen Stapel, bleibt auch dann, wenn es unter Zuhilfenahme von aus dem Trennmesser austretender Luft beim Spreizen unterstützt wird, eine Gefahr immer darin bestehen, daß eine Berührung zwischen den flexiblen Aufzeichnungsträgern und dem Trennmesser auftreten kann. Die Berührung ist insbesondere bei einer relativ tiefen Einführung des Trennmessers in den Plattenstapel und bei Ausfällen des Antriebs für den Plattenstapel kaum zu vermeiden. Dies kann möglicherweise zu sehr schwerwiegenden Beschädigungen und Zerstörungen der Aufzeichnungsbereiche des Plattenspeichers führen. Abgesehen selbstverständlich von möglichen Beschädigungen des Trennmessers oder auch des Wandlers.

Aufgabe vorliegender Erfindung ist es, eine Vorrichtung zum Spreizen eines solchen Plattenstapels zu schaffen, bei der ein sehr tiefes Eindringen des Trennmessers in den Plattenstapel nicht notwendig ist, daß des weiteren der Aufbau dieser Trennvorrichtung einfach ist und bei Stillstand des Plattenstapels bzw. bei erheblicher Verminderung der Drehzahl eine Zerstörung der magnetischen Aufzeichnungsbereiche und anderer Teile der flexiblen Platte und der dazugehörigen Teile, wie beispielsweise des Wandlers, mit größtmöglicher Sicherheit vermieden wird. Des weiteren soll der Kontakt und der damit verbundene Abrieb beim Berühren des feststehenden Trennmessers mit dem mit hoher Geschwindigkeit rotierenden Stapel an den Außenkanten der Platten vermieden bzw. weitgehend ausgeschlossen werden.

Diese Aufgabe wird erfindungsgemäß bei der Vorrichtung gemäß dem Oberbegriff des Anspruchs 1 dadurch gelöst, daß als Spreizvorrichtung ein mit dem Stapel mitlaufendes zustellbares Teil vorgesehen ist, daß dieses Teil in entgegengesetzter Drehrichtung zur Drehrichtung des Stapels um eine Rotationsachse drehbar ist, daß das mitlaufende Teil in bestimmter Drehwinkelposition zum Stapel angeordnet ist, und auf die Ränder der rotierenden Platten auslenkend einwirkt.

Diese prinzipielle Lösung bringt den Vorteil mit sich, daß zwischen dem rotierenden Stapel und der Spreizvorrichtung keine nachteiligen großen Geschwindigkeitsunterschiede bei der Kontaktierung vorhanden sind und daß durch die besondere Art der Auslenkung es zur Herstellung der Wandlerzugriffsöffnung nicht notwendig ist, die Spreizvorrichtung tief in den Plattenstapel zwischen die Platten einzuführen, sondern eine Beeinflussung der Ränder allein, dort wo meist noch keine datenspeichernde Magnetbeschichtung auf den Platten vorhanden ist, ausreicht.

Zu dieser prinzipiellen Lösung des mit dem Stapel mitlaufenden, zustellbaren Teils gibt es zwei besonders vorteilhafte Ausführungsgestaltungen.

Die eine Ausgestaltungsform sieht eine dünne steife Scheibe oder eine Vielzahl solcher Scheiben nebeneinander vor, die als mitlaufendes Teil zustellbar sind und die Platten bei der gewünschten Stelle auseinanderspreizen. Weitere vorteilhafte Ausgestaltungen dieser einen Gestaltungsmöglichkeit sind in den entsprechenden abhängigen Ansprüchen enthalten.

Eine weitere Ausgestaltung der prinzipiellen Lösung sieht vorteilhafterweise eine schräg gegen den Plattenstapel geneigte, frei laufende zylindrische Rolle mit elastischer Beschichtung großer Haftreibung vor. An dieser Rolle, die lediglich minimal in den Außenumfang des Stapels zugestellt bzw. eingefahren wird, klettern die Platten einerseits hoch und werden andererseits aus ihrer Rotationsebene ausgelenkt, um somit die Zugriffsöffnung für den Wandler zu schaffen. Weitere vorteilhafte Ausgestaltungen dieser Ausführungsform sind ebenfalls in den entsprechenden abhängigen Ansprüchen niedergelegt.

Aufbau und Wirkungsweise der erfindungsgemäßen Vorrichtung ist nachstehend anhand der in den Figuren dargestellten Ausführungsbeispiele näher erläutert. Die Figuren zeigen im einzelnen:

Fig. 1 schematisch die Ansicht eines Plattenstapels mit der zum Spreizen gemäß der einen Alternative der Erfindung benutzten, schräggestellten mitlaufenden Rolle,

Fig. 2 schematisch die Winkelbeziehungen zwischen dem Stapel und der Rolle gemäß Fig. 1 in perspektivischer Ansicht,

Fig. 3 schematisch die Ansicht eines Teils eines Plattenstapels und der gemäß der anderen Alternative zum Spreizen benutzten mitlaufenden dünnen Scheibe,

Fig. 4 vergrößert einen Ausschnitt aus der Scheibe gemäß Fig. 3,

Fig. 5 ein Satz von Scheiben, die alternativ anstelle der einzelnen Scheibe in Fig. 3 benutzt werden können,

Fig. 6 eine andere Art der Zustellung der mitlaufenden Spreizscheibe und der Bildung der Zugriffsöffnung und

Fig. 7 eine weitere Alternative der Ausgestaltung der Vorrichtung zum Spreizen eines flexiblen Plattenstapels, basierend auf dem Prinzip der rotierenden Scheibe.

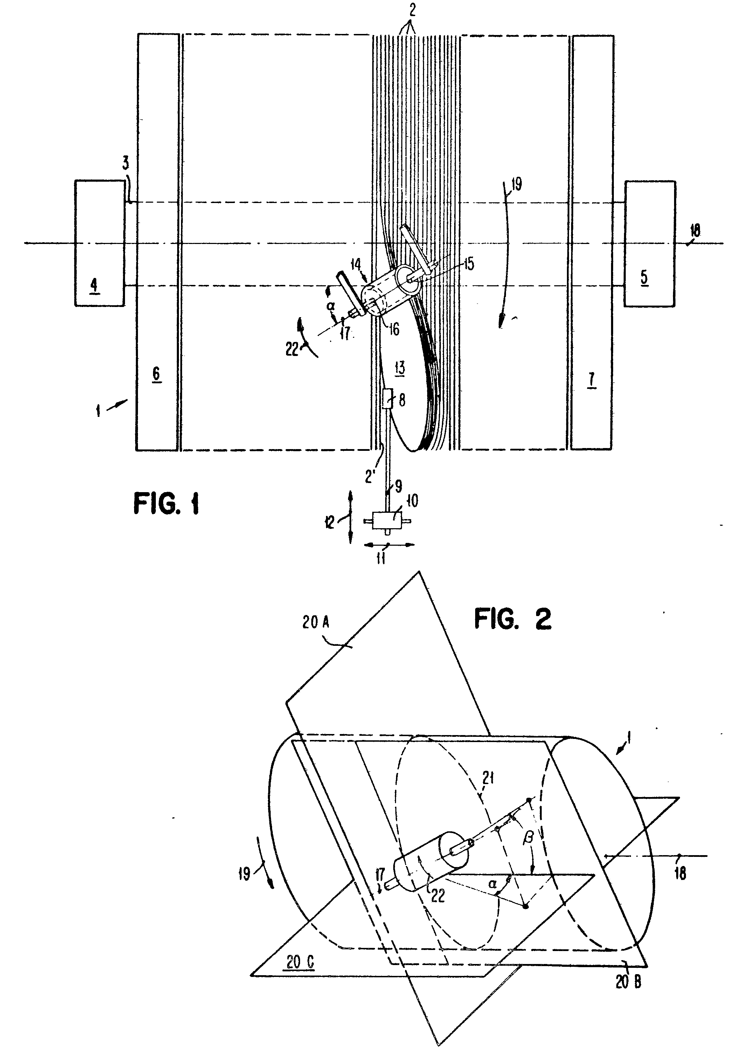

In Fig. 1 ist schematisch ein rotierender Plattenstapel 1 dargestellt. Der Plattenstapel 1 enthält eine Vielzahl von flexiblen Platten 2, die in sehr engem Abstand zueinander auf einer Spindel 3 angeordnet sind. In der Figur ist etwa nur jede fünfte Platte dargestellt. Die Spindel 3 ist beidseitig in Lagern 4 und 5 gelagert und durch einen nicht dargestellten Antrieb drehbar. Dabei werden die Platten 2 mit der Spindel 3 mitgenommen. Der Bereich der flexiblen Platten 2 ist beidseitig auf der Spindel 3 durch jeweils eine feste Platte 6 und 7 begrenzt, die als Referenz- oder Stabilisierungsplatte angesprochen werden kann. Die flexiblen Magnetplatten 2 bestehen aus einer Kunststoffolie, die mit magnetischem Aufzeichnungsmaterial beschichtet ist. Diese flexiblen Magnetplatten sind in sehr geringem Abstand von beispielsweise etwas weniger als 0,2 mm zentrisch auf der Spindel 3 aufgespannt und rotieren mit dieser. Dabei werden die einzelnen Platten aufgrund der Zentrifugalkraft und insbesondere durch die Reibungskräfte der durch den Plattenstapel zwischen den einzelnen Platten hindurchströmenden Luft gespannt und in einer Ebene gehalten.

Durch diese sehr enge Anordnung der flexiblen Platten ist einerseits auf das Volumen bezogen eine sehr große Speicherdichte erzielbar, andererseits jedoch die Problematik gegeben, daß ein magnetischer Übertragerkopf, der zum Lesen und Schreiben der Informationen auf ausgewählten Plattenseiten benutzt werden soll, nur in solchen Bauhöhen zur Verfügung steht, die ein Spreizen der Platten notwendig macht. Es muß also ein Teil der Platten aus ihren Rotationsebenen ausgelenkt werden, um eine Öffnung zu schaffen, in welche der Magnetkopf eingefahren werden kann, um Zugriff zu der gewünschten Plattenseite und zu der gewünschten Stelle zu haben, wo die Information eingeschrieben oder ausgelesen werden soll.

In Fig. 1 ist schematisch ein Magnetkopf 8 dargestellt, der an einem Arm 9 sitzt, welcher durch eine Vorrichtung 10 zum einen parallel zur Stapelachse in Richtung des Doppelpfeiles 11 und zum anderen radial zur Spindel 3 des Plattenstapels 1 in beiden Richtungen entlang dem Doppelpfeil 12 verschiebbar ist. Der Kopf 8 kann jedoch in den Zwischenraum 13 nur dann eingefahren werden, wenn die oberhalb der mit 2' bezeichneten Platte befindlichen anderen Magnetplatten 2 ausgelenkt und aus dem Weg geräumt sind.

Um diese Zugriffsöffnung 13 zu schaffen, wird erfindungsgemäß ein mit dem Stapel mitlaufendes Teil vorgesehen, das zum Stapel zustellbar ist, um somit die gewünschte Platte ortsmäßig auszuwählen. Das mitlaufende Teil wirkt dabei nur auf die Ränder der rotierenden Platten auslenkend ein. Die Realisierungsform, wie sie in Fig. 1 dargestellt ist, enthält als solches Teil eine Rolle 14. Diese Rolle 14 ist an beiden Enden 15 und 16 drehbar gelagert, wobei die Achse 17 der Rolle 14 gegenüber der Achse 18 des Plattenstapels 1 geneigt angeordnet ist. Die Rolle 14 ist frei laufend zwischen ihren beiden Enden 15 und 16 gelagert, kann jedoch auch angetrieben sein. Die Rolle 14 enthält einen Mantel bzw. eine äußere Beschichtung, die elastisch ist und die einen möglichst großen Haftreibungskoeffizienten für die Zusammenarbeit mit den Rändern der Platten hat.

Zur Herstellung der Zugriffsöffnung 13 ist die Rolle 14 in ihrer geneigten Anordnung gegenüber der Plattenstapelachse 18 auf die Ränder der einzelnen Platten bzw. dem Zylindermantel des Plattenstapels 1 zustellbar. Um die gewünschte Platte auszuwählen, wird die Rolle 14 zunächst parallel zum Plattenstapel 1 verschoben, beispielsweise in Richtung des Pfeiles 11, und dann in radialer Richtung auf den Außenrand des Plattenstapels 1 zu und geringfügig in diesen hinein zugestellt, entsprechend der einen Richtung des Pfeiles 12. Dabei entsteht dann die Zugriffsöffnung 13 zwischen derjenigen Platte, die als letzte von dem Rand der Rolle 14, die den Plattenstapel 1 am Umfang zunächst erreicht, nicht mehr berührt wird, dies ist die mit 2' in den Figuren bezeichnete, und derjenigen Platte 2, die gerade noch von diesem Rand der Rolle 14 erfaßt wird. Die in Fig. 1 rechts der ersten ausgelenkten Platte liegenden Platten werden ebenso wie diese auf dem Umfang der Rolle 14 abgestützt, geführt und ausgelenkt. Anhand der Fig. 2 wird auf die Wirkungsweise und die Orientierung der Rolle in bezug auf den Plattenstapel noch näher eingegangen.

Fig. 2 zeigt in perspektivischer Ansicht den Plattenstapel 1, der sich in Richtung des Pfeiles 19 mit einer Winkelgeschwindigkeit $\omega_1$ um die Achse 18 dreht. Im Bereich der Ebene 20, in der gestrichelt mit 21 eine Platte rotiert, wird die mitlaufende Rolle 14 mit einer Kante, in der Figur die linke Kante, an den Außenumfang des Plattenstapels 1 herangebracht. Dabei ist die Achse 17 der Rolle 14 um den Kletterwinkel $\alpha$

rechts der Berührungs- oder Eintauchstelle, die ansonsten durch die Tangentenebene 20B, die parallel zur Stapelachse 18 und senkrecht zur Ebene 20C, die ihrerseits die Ebene parallel zum Berührungspunkt und dem zugehörigen Stapeldurchmesser ist, liegt, gekennzeichnet ist, vom Stapel weg nach außen gekippt. Des weiteren ist die Rolle 14 bzw. ihre Achse 17 um den Auslenkwinkel $\beta$ rechts der Berührungs- bzw. Eintauchstelle entgegen der Rotationsrichtung 19 nach vorne gekippt.

Die Rolle 14 rotiert mit einer Winkelgeschwindigkeit $\omega_2$ in Richtung des Pfeiles 22, so daß an der Berührungs- bzw. Eintauchstelle der Rolle 14 in den Außenbereich des Plattenstapels 1 hinein die lineare Geschwindigkeit bzw. die tangentiale Geschwindigkeit beider Teile, nämlich des Plattenstapels 1 und der Rolle 14, gleich groß sind. Durch die große Haftreibung aufgrund des Materials für die Rolle 14 und der elastischen Oberfläche klettern die durch die Kippung um den Auslenkwinkel $\beta$ aus ihrer Rotationsebene 20 herausgelenkten Platten 2 an der Ummantelung der Rolle 14 bzw. an der Rolle 14 hoch, wobei durch die Größe des Kletterwinkels $\alpha$ das Ausmaß mitbestimmt wird.

Bei dem Vorgang des Eintauchens bzw. des Zustellens der Rolle 14 radial zu dem Plattenstapel 1 werden durch die mit der Geschwindigkeit $\omega_1$ rotierenden Platten 2 des Stapels 1 die Rolle 14 auf eine Geschwindigkeit beschleunigt, die fast der Geschwindigkeit des Plattenstapels im Berührungspunkt entspricht. Beim Kontaktieren selbst kommen dann die Plattenränder mit der elastischen Oberfläche der Rolle 14 in Berührung, und zwar im wesentlichen in punkt- oder linienförmige Berührung, derart, daß aufgrund der Elastizität kein Schlupf zwischen dem Plattenrand und dem Rollenmantel entsteht. Plattenrand und Rollenmantel verzahnen sich quasi ineinander. Durch die Stellung der Rolle, insbesondere aufgrund des Kletterwinkels $\alpha$, wandern die Platten am Rollenmantel hoch, wozu dafür eine in Richtung der Rollenachse 17 wirkende Kraft, herrührend von der Anpreßkraft zwischen der Rolle und dem Plattenstapel, verantwortlich ist. Wenn zwischen Steifigkeit der ausgelenkten Platten und dieser in Richtung der Rollenachse 17 wirkenden Kraft Gleichgewicht besteht, ist der Vorgang des Hochkletterns beendet.

Die Größenordnung für den Kletterwinkel $\alpha$ liegt etwa zwischen 1 und 5°, beträgt vorzugsweise ca. 2,5°, und die Größenordnung für den Auslenkwinkel $\beta$ liegt etwa zwischen 10 und 20° und beträgt vorzugsweise ca. 15°. Die Tiefe des Eindringens der Rolle an der Berührungsstelle ist sehr gering, liegt auf jeden Fall in demjenigen Randbereich der Platten, in dem normalerweise überhaupt keine Daten magnetisch aufgezeichnet werden. Die Größenordnung beträgt ca. 1 bis 2 mm, dies kann jedoch von der Art des Materials der verwendeten flexiblen Platten, deren Durchmesser und anderen Parametern abhängen.

Ein erfindungsgemäßer Aufbau eines Plattenstapels, wie er in Fig. 1 schematisch dargestellt ist, verwendete etwa 500 Platten im Plattenstapel 1. Die Plattendicke betrug ca. 0,075 mm, der Plattendurchmesser ca. 200 mm, der Abstand zwischen zwei Platten ca. 0,18 mm, die Drehzahl des Stapels etwa 1800 Umdrehungen/Minute, was einer Umfangsgeschwindigkeit von ca. 18 m/sec entspricht. Die Abmessung für die dabei verwendete Rolle 14 waren die folgenden: der Rollendurchmesser betrug ca. 22 mm, die Rollenlänge ca. 25 mm, der Kletterwinkel $\alpha$ 2,5°, der Auslenkwinkel $\beta$ 14° und die Eintauchtiefe der Rolle 1 mm. Dabei wurde eine größte Spaltöffnung am Rand von 10 mm erzielt und eine größte Spalthöhe innen in ca. 50 mm Tiefe vom Außenrand des Stapels entfernt von 3,8 mm Höhe, und zwar etwa 60° hinter dem Berührungspunkt zwischen Rolle 14 und Stapel 1.

Die Rolle 14 kann angetrieben werden, damit sie dieselbe tangentiale Geschwindigkeit am Eingriffspunkt aufweist wie der Plattenstapel 1 selber. Dies erfordert jedoch einen gewissen Aufwand. Einfacher und völlig ausreichend ist es, die Rolle leichtgewichtig, beispielsweise aus Aluminium zu gestalten und mit der elastischen und einen großen Haftreibungskoeffizienten aufweisenden Ummantelung, beispielsweise aus Polyurethan, zu umgeben. Diese Rolle wird beim Kontaktieren des Plattenstapels von den Außenrändern der Platten 2 auf dieselbe Geschwindigkeit beschleunigt, und zwar in sehr kurzer Zeit, wie es der Tangentialgeschwindigkeit des Plattenstapels am Außenumfang entspricht. Dadurch, daß sich die Außenränder der Platten mit der elastischen Ummantelung der Rolle verzahnen und — abgesehen vom anfänglichen Bereich des Kontaktierens — kein Schlupf zwischen Rolle und Plattenrändern besteht, gibt es keine Relativbewegung und damit keinen Abrieb. Sogar bei der Verringerung der Umfangsgeschwindigkeit des Plattenstapels, ja sogar bei Stehenbleiben des Plattenstapels kann in gewissen Fällen durch diese Rolle erzielt werden, daß die Plattenränder an dieser Rolle haften bleiben und somit sich die Zugriffsöffnung für den Kopf 8 nicht schließt. Dies ist insbesondere dann der Fall, wenn die Rotationsachse 18 des Plattenstapels 1 im wesentlichen horizontal angeordnet ist und die Rolle 14 im unteren Bereich des Plattenstapels 1 zum Trennen des Plattenstapels an diesen herangefahren wird. In dieser Konstellation ist es auch möglich, daß der Plattenstapel unter Aufrechterhaltung der Zugriffsöffnung 13 wieder anlaufen kann, da die Plattenränder auf der Rolle gestützt stehen bleiben und somit wieder anlaufen können. Dadurch, daß die Plattenränder auf der Rolle gestützt gehalten sind, bleibt auch zwischen den einzelnen Platten ein Luftpolster bestehen, d. h. die Platten liegen nicht aufeinander auf, so daß die Strömungsverhältnisse des Plattenstapels durch das Herstellen der Zugriffsöffnung 13 mit der erfindungsgemäß vorgesehenen Rolle 14 nicht wesentlich gestört werden.

In manchen Fällen kann es von Vorteil sein, wenn die Rolle 14 an derjenigen Kante, die mit dem Plattenstapel zum Erzeugen der Zugriffsöffnung 13 in Kontakt kommt, mit einem Stahlring am Außenumfang versehen ist. Dieser Stahlring sollte eine nur sehr geringe Höhe von vielleicht ca. 0,5 mm aufweisen und denselben Außenumfang haben wie die elastische Oberfläche der Rolle 14. Dadurch ist die Trennung in an der Rolle im elastischen Bereich hochlaufenden Plattenrändern von derjenigen Platte 2', die nicht mehr ausgelenkt wird, unter Umständen genauer durchführbar.

Wie aus der vorstehenden Beschreibung dieses Ausführungsbeispiels eindeutig hervorgeht, wird durch die mitlaufende Rolle 14 der Plattenstapel 1 nur in seinen Außenbereichen, bzw. genauer nur an seinen Rändern kontaktiert. Eine Berührung der Spreizvorrichtung mit Plattenteilen, welche Informationen tragen, ist überhaupt nicht möglich. Dadurch ist eine mögliche Beschädigung des Informationen speichernden Bereichs der Platten durch die erfindungsgemäß gestaltete Spreizvorrichtung völlig ausgeschlossen. Darüber hinaus werden die Ränder der Platten einer nur ganz minimalen, wenn überhaupt einer, Verschleiß verursachenden Beanspruchung ausgesetzt. Dies ist von entscheidendem Vorteil.

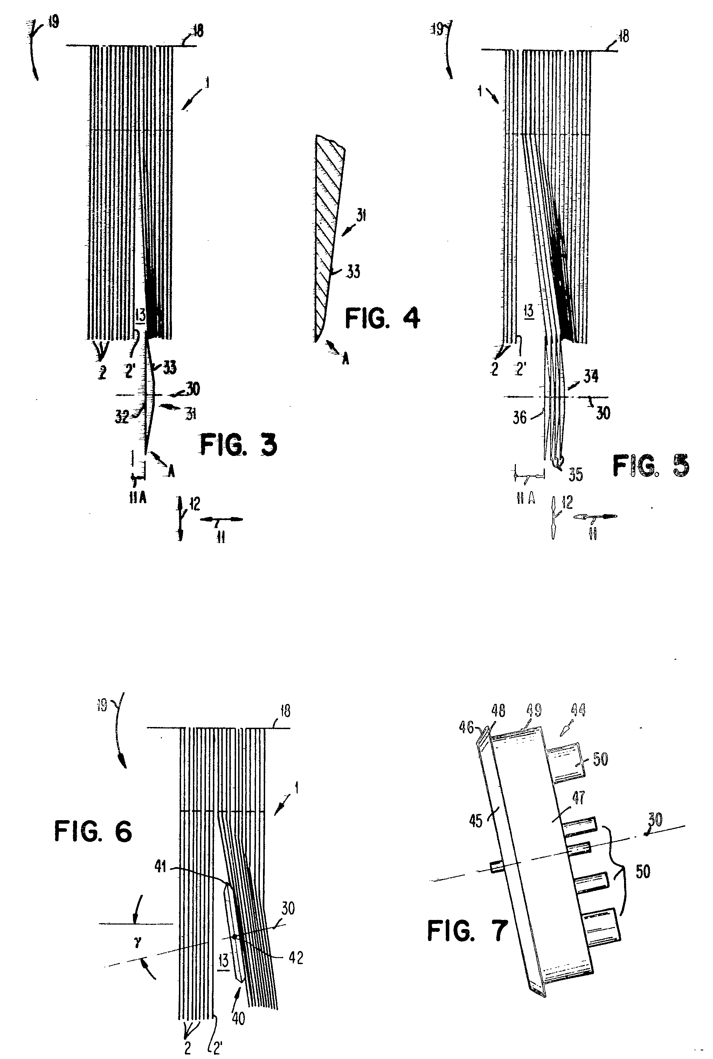

Anhand der Fig. 3 bis 6 wird nachfolgend eine alternative Ausführungsform der prinzipiellen erfindungsgemäßen Lösung des mitlaufenden Teils für die Herstellung der Zugriffsöffnung in einem rotierenden Plattenstapel dargestellt. Fig. 3 zeigt zunächst schematisch einen Ausschnitt des Plattenstapels 1 und eine am Umfang zustellbare und um eine Achse 30 drehbare Trennscheibe 31. Die Scheibe 31 ist relativ dünn gestaltet, vor allen Dingen ist der Außenrand keilförmig ausgeführt, wobei zwischen der einen Seite 32, die eben ist und auf der die ausgewählte Platte liegt, und der rampenförmigen Seite 33 der Scheibe 31 ein spitzer Winkel von wenigen Grad vorhanden ist. Die Spitze zwischen der ebenen Seite 32 und der rampenförmigen Seite 33 der Scheibe 31 kann, entsprechend durch Pfeil A angedeutet und wie es in Fig. 4 vergrößert dargestellt ist, auch abgerundet sein, um den Kontaktbereich zwischen aufliegenden Platten 2 und Scheibe 31 klein zu halten.

Die Scheibe 31 wird durch einen nicht dargestellten Antrieb angetrieben, so daß die Umfangsgeschwindigkeit in Richtung und Größe beim Kontaktbereich mit dem Plattenstapel 1 derjenigen des Plattenstapels an dieser Kontaktstelle entspricht. Zum Antrieb kann eine Verbindung mit dem Plattenstapelantrieb gewählt werden, es kann ein separater Antrieb oder auch ein Luftschaufelrad verwendet werden, wie dies in Fig. 7 noch gezeigt ist, welches von der tangentialen Luftströmung des rotierenden Stapels 1 beaufschlagt und in Rotation versetzt wird.

Zur Herstellung der Zugriffsöffnung 13 wird die Scheibe 31 zunächst in axialer Richtung gemäß dem Doppelpfeil 11 auf die gewünschte Position verfahren, dann wird eine Zustellung in radialer Richtung entsprechend dem Pfeil 12 vorgenommen und nach Einfahren der Spitze bzw. des Außenumfanges der Scheibe 31 von etwa 2 mm in den Stapel hinein wird eine weitere Verschiebung der Scheibe 31 in Richtung des Pfeiles 11A vorgenommen, so daß zwischen der ebenen Seite 32 und der selektierten Platte 2' die gewünschte Zugriffsöffnung 13 entsteht. Die größte Zugriffsöffnung ist dabei größer als die Bewegung in Richtung des Pfeiles 11A und liegt in der Rotationsrichtung des Plattenstapels 1 gesehen kurz hinter der Eintauchstelle des Randes der Scheibe 31 in den Umfang des Plattenstapels 1.

Die zur Bildung der Zugriffsöffnung 13 durch die Scheibe 31 ausgelenkten und auf deren Rand ruhenden Platten werden durch die Auslenkbewegung zusammengedrückt und die dabei entstehende Last ist von dem Rand der Scheibe 31 aufzunehmen. Es kann dabei auch sein, daß mehrere Platten in unmittelbarer Nachbarschaft der untersten bzw. ersten ausgelenkten Platte aufeinander liegen. Um für den Außenrand der Scheibe 31 eine Entlastung beim Tragen der aufliegenden Platten 2 zu ermöglichen und ein Durchrutschen der ersten bzw. untersten ausgelenkten Platte somit sicher zu vermeiden, ist die am Außenumfang sägezahnförmig gestaltete Rolle 34 vorgesehen, wie sie in Fig. 5 dargestellt ist. Diese Rolle 34 kann als eine Vielzahl der Scheiben 31 bezeichnet werden, die in dünnerer Form unmittelbar aneinandergesetzt sind. Die einzelnen schrägen Rampen 35, die je ca. 4 – 6 einzelne Platten 2 aufnehmen können, entsprechen dabei der Rampe 33 in Fig. 3 und die ebene Seite 36 entspricht der ebenen Seite 32 der Scheibe 31, welche die selektierte Platte 2' bestimmt. Die Zustellung der Rolle 34 zum Plattenstapel 1 und die Bildung der Zugriffsöffnung 13 erfolgt analog zu der, die im Zusammenhang mit der Scheibe 31 in Fig. 3 beschrieben wurde, jedoch kann, wie Fig. 6 zeigt, bei gleicher Eindringtiefe eine größere Zugriffsöffnung 13 erzielt werden. Auch die Rolle 34 kann in gleicher Weise angetrieben werden. Bei der Zustellung der Scheibe 31 bzw. Rolle 34 zu den Platten 2 des Plattenstapels 1 und der dabei erforderlichen Eindringtiefe, d. h. wie weit dringt der Außenrand der Scheibe 31 bzw. Rolle 34 in den Außenumfang des Plattenstapels 1 ein, ist die Frage der Steifheit der Platten und deren Rotationsstabilität sehr beeinflussend. Bei steiferen Platten ist eine geringere Eindringtiefe notwendig als bei weniger steifen bzw. dicken Platten. In jedem Fall ist die Eindringtiefe nur so gering, daß der eigentliche Aufzeichnungsbereich der Platte nicht tangiert wird.

In Fig. 6 ist eine weitere Ausgestaltung der rotierenden Scheibe schematisch dargestellt. Die dort gezeigte Scheibe 40 ist bis auf die Randbereiche planparallel. Die Randbereiche sind doppelkeilförmig gestaltet. Das wesentliche ist jedoch bei dieser Ausführungsform, daß die Zugriffsöffnung 13 für den Kopf anders als bei den Ausführungsbeispielen gemäß den Fig. 3 und 5 hergestellt wird. Die Zustellbewegung erfolgt wie bei diesen Beispielen zunächst achsparallel zum Stapel 1 und dann radial auf den Stapel zu, wobei der Außenrand 41 der Scheibe 40 geringfügig, beispielsweise 1 bis 2 mm, in den Umfang des Plattenstapels 1 eindringt. Dann erfolgt eine Schwenkung der Scheibe 40 mit ihrer Rotationsachse 30 um eine mit 42 bezeichnete Schwenkachse herum mit einem Winkel $\gamma$, der etwa zwischen 5 und 10° beträgt. Der Schwenkpunkt 42 liegt außerhalb der Scheibe 40 und etwa in der Rotationsebene der selektierten Platte 2'. Die Wirkung dieser Spreizscheibe 40 besteht darin, daß durch das zunächst radiale Einfahren der Scheibe zwischen die Platten 2, ähnlich wie bei der Darstellung in Fig. 3 und 5, ein Teil der Platten auf dem Außenrand 41 aufliegt und von ihm getragen werden kann, und daß dann durch die Schwenkbewegung um die Schwenkachse 42 herum die Platten 2, die vom Rand 41 getragen werden, aus ihrer Rotationsachse ausgelenkt werden, so daß in Rotationsrichtung 19 gesehen, hinter der Scheibe 40 die Zugriffsöffnung 13 vorhanden ist.

Eine weitere Ausgestaltungsform der mitlaufenden Spreizvorrichtung, insbesondere alternativ zu der in Fig. 6 dargestellten Scheibe 40, stellt die in Fig. 7 dargestellte Rolle 44 dar, die aus einer dünnen Scheibe 45 mit einseitig abgeschrägter Außenkante 46 zur Plattenselektion sowie einem im Durchmesser dünneren zylindrischen Teil 47, der breiter als die Scheibe 45 ist, aufgebaut ist. Die Zustellung dieser Rolle 44 erfolgt analog der der Scheibe 40 in Fig. 6 und auch die Herstellung der Zugriffsöffnung 13 ist dieselbe wie dort. Die ausgelenkten Platten, die in der Darstellung der Fig. 6 rechts von der Scheibe 40 liegen, sind jedoch nicht nur von dem Rand 48 getragen, sondern sie können auch noch auf dem zylindrischen Teil 49 des Rollenteils 47 aufliegen. Damit diese dort gestützt werden, kann ähnlich wie bei der Rolle in Fig. 1 und 2, der Rollenmantel aus elastischem Material, wie beispielsweise Polyurethan, hergestellt sein. Wie des weiteren der Darstellung in Fig 7 entnommen werden kann, sind an der rechten Seite des zylindrischen Teils 47 der Rolle Luftschaufeln 50 angebracht, die zum Antrieb der Trennrolle 44 dienen. Dadurch wird die notwendige Geschwindigkeit des Umfangs im Bereich der Abschrägung 46 und 48 erreicht, damit möglichst keine Reibung zwischen der mitlaufenden Trennvorrichtung und dem umlaufenden Plattenstapel im Berührungsbereich vorhanden ist.

Durch die verschiedenen in vorstehenden Ausführungsformen dargestellten Möglichkeiten für die Trennung eines Plattenstapels ist klar erkennbar ein grundsätzlicher und wesentlicher Vorteil zu sehen, daß nämlich die Trennvorrichtung nur den Randbereich des Plattenstapels berührend und auslenkend beeinflußt, daß aber der eigentliche Bereich, in dem Aufzeichnungen auf der Magnetbeschichtung vorgenommen werden und vorhanden sind, durch die Trennvorrichtung nicht überstrichen wird. Dadurch ist eine mechanische Beschädigung des Aufzeichnungsbereichs durch die Trennvorrichtung völlig ausgeschlossen. Darüber hinaus ist die Beanspruchung der Randbereiche des Plattenstapels bei einem mitlaufenden Spreizteil wesentlich geringer als bei einem feststehenden Spreizteil.

**Patentansprüche**

1. Vorrichtung zum Spreizen flexibler Aufzeichnungsträger an beliebiger Stelle eines rotierenden Stapels (1) magnetischer Platten (2), bei welchem der Abstand benachbarter Platten (2) geringer als die entsprechende Ausdehnung zur Datenaufzeichnung bzw. -abtastung dienender Wandler (8) ist, so daß mindestens ein Wandler (8) über mindestens einer Seite einer Platte (2) in Arbeitsstellung gebracht werden kann, dadurch gekennzeichnet,
daß als Spreizvorrichtung ein mit dem Stapel (1) mitlaufendes, zustellbares Teil (14, 31, 34, 40, 44) vorgesehen ist,
daß dieses Teil (14, 31, 34, 40, 44) in entgegengesetzter Drehrichtung (22) zur Drehrichtung (19) des Stapels (1) um eine Rotationsachse (17, 30) drehbar ist,
daß das mitlaufende Teil (14, 31, 34, 40, 44) in bestimmter Drehwinkelposition zum Stapel (1) angeordnet ist.
und auf die Ränder der rotierenden Platten (2) auslenkend einwirkt.

2. Vorrichtung nach Anspruch 1, dadurch gekennzeichnet, daß das mitlaufende, zustellbare Teil als dünne steife Scheibe (31) ausgestaltet ist.

3. Vorrichtung nach Anspruch 2, dadurch gekennzeichnet, daß die dünne steife Scheibe (31) im Querschnitt die Form eines flachen O-ecks aufweist.

4. Vorrichtung nach Anspruch 2 oder 3, dadurch gekennzeichnet, daß der Außenrand der Scheibe (31) auf einer Seite (33, A) abgerundet ist (Fig. 4)

5. Vorrichtung nach einem der Ansprüche 2 bis 4, dadurch gekennzeichnet, daß mehrere Scheiben (31) parallel nebeneinander über die Länge des Stapels (1) vorgesehen und parallel hindurch Teil (34) verschiebbar sind.

6. Vorrichtung nach einem der Ansprüche 2 bis dadurch gekennzeichnet, daß die Scheibe (31, 44) kreis angeordnet auf der Luftzirkulation Stapels durch eine mit dem antrieb Antriebsvorrichtung verbunden

nach einem der Ansprüche 2 bis 6, dadurch net, daß nach radialer stellung der (31, 34) in den Plattenbereich gangenen Zwischenraums zwischen Platte (2) eine geringfügige

Verschiebung (11A) in zur Achse (18) des Plattenstapels (1) paralleler Richtung (11) erfolgt oder daß eine geringfügige Schwenkung der Scheibe (40, 44) um ihre Rotationsebene aus deren Parallelität mit der Rotationsebene der selektierten Platte (2') heraus erfolgt mit einer Kippkomponente auf die Plattenstapelachse (18) zu gemäß einem Winkel ($\gamma$) von etwa 5 bis 10°.

8. Vorrichtung nach Anspruch 1, dadurch gekennzeichnet, daß das mitlaufende zustellbare Teil eine schräg gegen den Plattenstapel (1) geneigt angeordnete frei laufende zylindrische Rolle (14) mit elastischer Beschichtung großer Haftreibung ist, wobei die Schräganordnung derart gewählt ist, daß die auszulenkenden Platten (2) an der Rolle (14) hochklettern und aus ihrer Rotationsebene (20, 21) ausgelenkt werden, so daß in Rotationsrichtung (19) gesehen hinter dem Berührungspunkt zwischen Plattenstapel (1) und Rolle (14) die gewünschte Zugriffsöffnung (13) vorhanden ist.

9. Vorrichtung nach Anspruch 8, dadurch gekennzeichnet, daß die Rotationsachse (17) der zylindrischen Rolle (14) um einen Kletterwinkel $\alpha$ von der Plattenstapelachse (18) weggekippt ist, wobei der Wert des Kletterwinkels $\alpha$ zwischen 1 und 5°, vorzugsweise 2,5°, beträgt und um den Auslenkwinkel $\beta$ gegen die Rotationsebene (20, 21) der nichtausgelenkten Platten (2) entgegen der Bewegungsrichtung (19) der Platten (2) gekippt ist, wobei der Wert des Auslenkwinkels $\beta$ zwischen etwa 10 und 20°, vorzugsweise bei 15°, liegt.

10. Vorrichtung nach Anspruch 8 oder 9, dadurch gekennzeichnet, daß die Rolle (14) am Trennende einen schmalen Bereich großer Härte, vorzugsweise einen Stahlring, aufweist, der denselben Durchmesser wie der elastische Teil der Rolle (14) aufweist.

11. Vorrichtung nach einem der Ansprüche 8 bis 10, dadurch gekennzeichnet, daß die Rolle (14) an ihrer Trennseite nur geringfügig, ca. 0,5—2 mm, in den Umfangsbereich des Plattenstapels (1) eingeführt wird.

12. Vorrichtung nach einem der Ansprüche 8 bis 11, dadurch gekennzeichnet, daß die Rolle (14) aus einem leichtgewichtigen Aluminiumkörper besteht und mit einer Ummantelung aus Polyurethan umgeben ist.

Claims

1. Arrangement for separating flexible magnetic disks (2) at any selected point of a rotating stack (1) of such disks (2) whose normal spacing is less than the corresponding dimension of a transducer (8) serving to record and to sense data, whereby the transducer (8) can be moved into an operating position above at least one side of a disk (2), characterized in that a component (14, 31, 34, 40, 44) corotating with and capable of accessing the stack (1) is provided as a spreader, in that the component (14, 31, 34, 40, 44) is rotatable about an axis of rotation (17, 29) in a direction (22) opposite to the direction of rotation (19) of the stack (1), and in that the corotating component (14, 31, 34, 40, 44) is arranged at an angle of rotation to the stack (1) and causes the edges of the rotating disks (2) to be deflected.

2. Arrangement according to claim 1, characterized in that the corotating and accessing component is designed as a thin rigid disk (31).

3. Arrangement according to claim 2, characterized in that the thin rigid disk (31) has a cross-section shaped in the form of a flat triangle.

4. Arrangement according to claim 2 or 3, characterized in that the outer edge of the disk (31) is rounded on one side (33, A) (Fig. 4).

5. Arrangement according to any one of the claims 2 to 4, characterized in that several disks (31) are distributed parallel to each other along the length of the stack (1) and as a roller component (34) are jointly shiftable in parallel.

6. Arrangement according to any one of the claims 2 to 5, characterized in that the disk (31, 34, 40, 44) is driven either by a coaxially arranged air impeller wheel (50) as a function of the air circulation of the stack (1) or by drive means coupled to the stack drive.

7. Arrangement according to any one of the claims 2 to 6, characterized in that after the disk (31, 34) has been made to radially access the disk edge area of the desired spacing between two disks (2), a slight shift (11A) is effected in a direction (11) parallel to the axis (18) of the disk stack (1) or that the disk (40, 44) is slightly tilted about its plane of rotation out of its parallelism with the plane of rotation of the selected disk (2') with a component of tilt towards the disk stack axis (18), according to an angle ($\gamma$) of about 5 to 10°.

8. Arrangement according to claim 1, characterized in that the corotating accessing component is a freely rotating cylindrical roller (14) with a resilient coating of high static friction which is obliquely inclined against the disk stack (1), the oblique arrangement being chosen in such a manner that the disks (2) to be deflected climb up the roll (14) and are deflected from their plane of rotation (20, 21), so that, viewed in the direction of rotation (19), the desired access opening (13) lies behind the point of contact between disk stack (1) and roll (14).

9. Arrangement according to claim 8, characterized in that the axis of rotation (17) of the cylindrical roll (14) is tilted off the disk pack axis (18) through a climbing angle $\alpha$, whereby the magnitude of the climbing angle $\alpha$ is between 1 and 5°, preferably 2.5°, and is tilted through a deflection angle $\beta$ against the plane of rotation (20, 21) of the non-deflected disks (2) opposite to the direction of movement (19) of the disks (2), the magnitude of the deflection angle $\beta$ being between about 10 and 20°, preferably 15°.

10. Arrangement according to claim 8 or 9, characterized in that the roller (14) is provided on its separating end with a narrow area of substantial hardness, preferably a steel ring, having the same diameter as the resilient part of the roller (14).

11. Arrangement according to any one of the claims 8 to 10, characterized in that the roller (14), on its separating side, is introduced only slightly, about 0.5 to 2 mm, into the circumferential area of the disk stack (1).

12. Arrangement according to any one of the claims 8 to 11, characterized in that the roller (14) consists of a light-weight aluminium body and is surrounded by a sheath of polyurethane.

## Revendications

1. Dispositif pour écarter des milieux d'enregistrement flexibles en un point quelconque d'une pile rotative (1) de disques magnétiques (2) dans lequel la distance séparant les disques adjacents (2) est inférieure à l'épaisseur des transducteurs (8) utilisés pour enregistrer et détecter des données, afin qu'au moins un transducteur (8) puisse être amené en position de fonctionnement au-dessus d'au moins un côté d'un disque (2), caractérisé en ce que: un élément (14, 31, 34, 40, 44) tournant avec la pile (1) et pouvant accéder à celle-ci, est prévu comme élément d'écartement, ledit élément (14, 31, 34, 40, 44) étant entraîné en rotation autour d'un axe (17, 30) dans un sens (22) opposé au sens de rotation (19) de la pile (1), et étant monté de façon que son axe de rotation fasse un angle particulier par rapport à la pile (1) afin de provoquer l'écartement des bords des disques rotatifs (2).

2. Dispositif selon la revendication 1, caractérisé en ce que l'élément rotatif accédant à la pile est conçu sous la forme d'un disque mince rigide (31).

3. Dispositif selon la revendication 2 ou 3, caractérisé en ce que le disque mince rigide (31) est de section triangulaire.

4. Dispositif selon la revendication 2 ou 3, caractérisé en ce que le bord extérieur du disque (31) est arrondi d'un côté (33, A) (figure 4).

5. Dispositif selon l'une quelconque des revendications 2 à 4, caractérisé en ce que plusieurs disques (31) sont disposés parallèlement les uns aux autres sur la longueur de la pile (1) et en ce qu'ils forment ensemble un cylindre (34) et qu'ils peuvent être décalés conjointement tout en restant parallèles les uns aux autres.

6. Dispositif selon l'une quelconque des revendications 2 à 5, caractérisé en ce que le disque (31, 34, 40, 44) est entraîné soit par une roue motrice pneumatique (50) à montage coaxial en fonction de la circulation pneumatique dans la pile (1), soit par un moyen d'entraînement couplé à l'entraînement de la pile.

7. Dispositif selon l'une quelconque des revendications 2 à 6, caractérisé en ce que, après que le disque (31, 34) ait accédé radialement à la zone périphérique d'un disque de la pile dans l'intervalle choisi entre deux disques (2), un léger décalage (11A) est provoqué dans un sens (11) parallèle à l'axe (18) de la pile de disques (1) ou en ce que le disque (40, 44) est légèrement décalé par rapport à son plan de rotation et n'est plus parallèle au plan de rotation du disque sélectionné (2'), ce décalage par rapport à l'axe de la pile de disques (18) étant égal à un angle ($\gamma$) d'approximativement 5 à 10°.

8. Dispositif selon la revendication 1, caractérisé en ce que l'élément rotatif d'accès est un rouleau cylindrique (14) tournant librement, revêtu d'une matière élastique à friction statique élevée et monté obliquement contre la pile de disques (1), le montage oblique étant choisi de telle manière que le disque (2) à décaler remonte le rouleau (14) et soit décalé par rapport à leur plan de rotation (20, 21), de façon que, dans le sens de rotation (19), l'ouverture d'accès désiré (13) se trouve derrière le point de contact entre la pile de disques (1) et le rouleau (14).

9. Dispositif selon la revendication 8, caractérisé en ce que l'axe de rotation (17) du rouleau cylindrique (14) est décalé par rapport à l'axe de la pile de disques (18) d'un angle positif $\alpha$ compris entre 1 et 5° et de préférence égal à 2,5°, et est décalé d'un angle $\beta$ par rapport au plan de rotation (20, 21) des disques non décalés (2) à l'opposé du sens du mouvement (19) des disques (2), la valeur de l'angle $\beta$ étant de l'ordre de 10 à 20°, et de préférence égale à 15°.

10. Dispositif selon la revendication 8 ou 9, caractérisé en ce que le rouleau (14) comporte à son extrémité de séparation, une zone étroite à dureté élevée, constituée de préférence par une bague d'acier présentant un diamètre égal à celui de la partie élastique du rouleau (14).

11. Dispositif selon l'une quelconque des revendications 8 à 10, caractérisé en ce que le rouleau (14), par son côté de séparation, n'est que légèrement introduit dans la zone périphérique de la pile de disques (1), à une profondeur de l'ordre de 0,5 à 2 mm.

12. Dispositif selon l'une quelconque des revendications 8 à 11, caractérisé en ce que le rouleau (14) est composé d'un corps en aluminium léger entouré par une gaine de polyuréthane.

**FIG. 1**

**FIG. 2**

FIG. 3

FIG. 4

FIG. 5

FIG. 6

FIG. 7